# EUROPEAN PATENT APPLICATION

(11) **EP 4 520 670 A1**
(43) Date of publication of application: **12.03.2025**
(21) Application number: 23195360.5
(22) Date of filing: 05.09.2023
(51) Int. Cl.: B65B 7/28, B65B 29/00, B65B 51/10, B65B 61/26, B65B 43/50

(54) **MANUFACTURING MACHINE AND MANUFACTURING METHOD FOR THE PRODUCTION OF A POD CONTAINING A SMOKING PRODUCT**

(71) Applicant: Sasib S.p.A., 40013 Castel Maggiore (BO) (IT)
(72) Inventor: GHIOTTI, Roberto, 40133 Bologna (IT); MANFREDI, Enrico, 40133 Bologna (IT)
(74) Representative: Studio Torta S.p.A.

(57) **Abstract**

Manufacturing machine (11) and manufacturing method for the production of a pod (1) containing a smoking product (2). The pod (1) has: a container (3), which is cup-shaped and has a lower wall (4) and a side wall (5) ending with an annular collar (6); and a lid (7), which closes the container (3) at the top and rests on the annular collar (6) of the container (3). The following are provided: a main conveyor (12), which moves at least one pocket (13) designed to contain the container (3) along a manufacturing path (P); a first feeding station (S1) provided with a first feeding assembly (16), which is configured to insert the empty container (3) into the pocket (13) while standing still; a filling station (S7), where a quantity of product (2) is inserted into the container (3) carried by the pocket (13) while standing still; a second feeding station (S9) provided with a second feeding assembly (39) which is configured to place the lid (7) on the annular collar (6) of the container (3) carried by the pocket (13) while standing still; and a crimping station (S10) which is arranged downstream of the second feeding station (S9) and is provided with a crimping assembly (52) configured to fold in a "U"-shape an outer edge (8) of the lid (7) around the annular collar (6) so as to embrace the annular collar (6).

## Description

### CROSS-REFERENCE TO RELATED APPLICATIONS

This patent application is related to Italian patent application No. 102022000017517 filed on August 24, 2022, the entire disclosure of which is incorporated herein by reference.

### TECHNICAL FIELD

The present invention relates to a manufacturing machine and a manufacturing method for the production of a pod containing a smoking product.

### PRIOR ART

The hookah (also called water pipe or "*shisha*") is a smoking tool made up of a water container, often scented, inside which a spiral is passed, which allows the smoke to cool before reaching the mouth of the smoker through a flexible or, more rarely, rigid tube. Smoke is generated by heating (rather than burning) a mixture of tobacco, molasses and glycerine which is held under a perforated metal sheet (aluminium) on which a charcoal ember (or other equivalent heating device) is arranged.

The traditional preparation of a hookah requires a rather long time, a certain manual skill, and a certain expertise (particularly in wrapping the mixture as tightly as possible with aluminium film which must then be perforated in the correct way). Consequently, pre-formed pods have recently been proposed for use in hookahs (as, for example, described in patent applications EP2179667A1, WO2016082851A1 and WO2018082954A1): it is sufficient to insert a pod (after having removed the same from its waterproof wrap and having removed the sealing stickers that are provided on the lid and on the bottom, respectively) in the hookah and then place a charcoal ember (or another equivalent heating element) on top of the pod.

### DESCRIPTION OF THE INVENTION

The object of the present invention is to provide a manufacturing machine and a manufacturing method for the production of a pod containing a smoking product, which manufacturing machine and manufacturing method allow high productivity to be achieved, while guaranteeing high quality standards and are, at the same time, easy and inexpensive to implement.

According to the present invention, a manufacturing machine and a manufacturing method are provided for the production of a pod containing a smoking product, as claimed in the attached claims.

The claims describe preferred embodiments of the present invention forming an integral part of the present disclosure.

### BRIEF DESCRIPTION OF THE DRAWINGS

The present invention will now be described with reference to the attached drawings, which illustrate a non-limiting embodiment thereof, wherein:
- Figure 1 is a schematic view of a pod containing a smoking product;
- Figure 2 is a schematic and exploded view of the pod of Figure 1;
- Figure 3 is an enlarged scale view of a collar of a container of the pod of Figure 1 before coupling with a corresponding lid;
- Figure 4 is a schematic view of the pod lid of Figure 1 before coupling with the container;
- Figure 5 is a plan view, schematic and with parts removed for clarity, of a manufacturing machine that produces the pod of Figure 1;
- Figure 6 is a perspective view of part of a main conveyor of the manufacturing machine of Figure 5;
- Figure 7 is a perspective view of a feeding assembly of the manufacturing machine of Figure 5;
- Figures 8 and 9 are two perspective views of as many details of the feeding assembly of Figure 7;
- Figure 10 is a schematic view of a first labelling assembly of the manufacturing machine of Figure 5;
- Figure 11 is a schematic view of a first sealing assembly of the manufacturing machine of Figure 5;
- Figure 12 is a perspective view of a feeding assembly and a crimping assembly of the manufacturing machine of Figure 5;
- Figure 13 is a perspective view of part of the feeding assembly of Figure 12;
- Figure 14 is a perspective view of part of the crimping assembly of Figure 12;
- Figure 15 is a schematic view of a pressing assembly of the manufacturing machine of Figure 5;
- Figure 16 is a perspective view of a control assembly of the manufacturing machine of Figure 5; and
- Figure 17 is a perspective view of a second labelling assembly of the manufacturing machine of Figure 5.

### PREFERRED EMBODIMENTS OF THE INVENTION

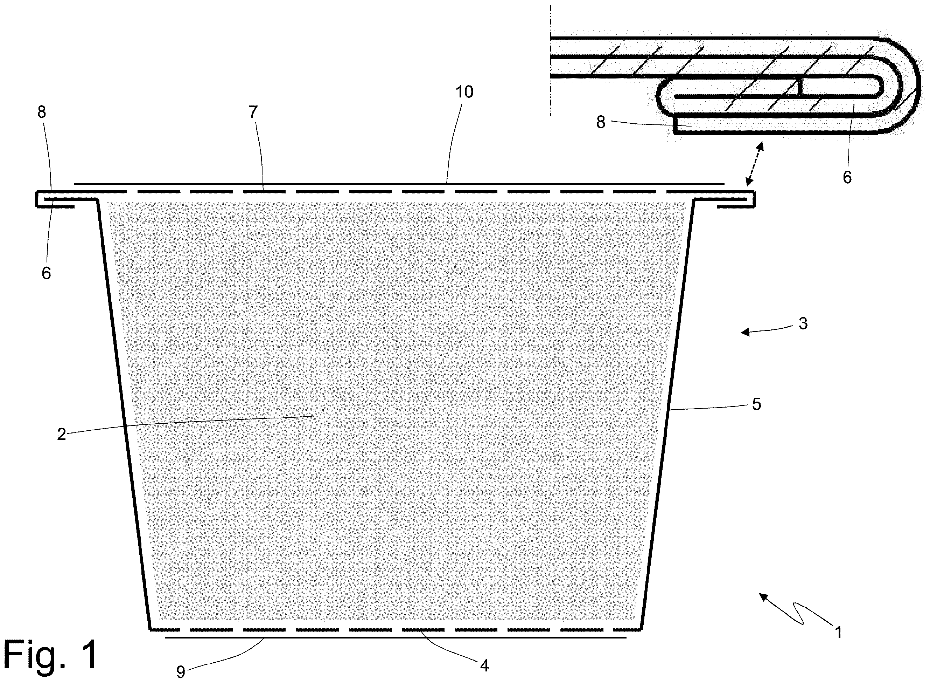

A pod containing a smoking product 2 (for example a mixture of tobacco, molasses, and glycerine) and intended to be used in a hookah is indicated in Figure 1 and with number 1. In particular, the smoking product 2 is designed to generate an aerosol after being heated (at relatively high temperatures of the order of 300-400 °C).

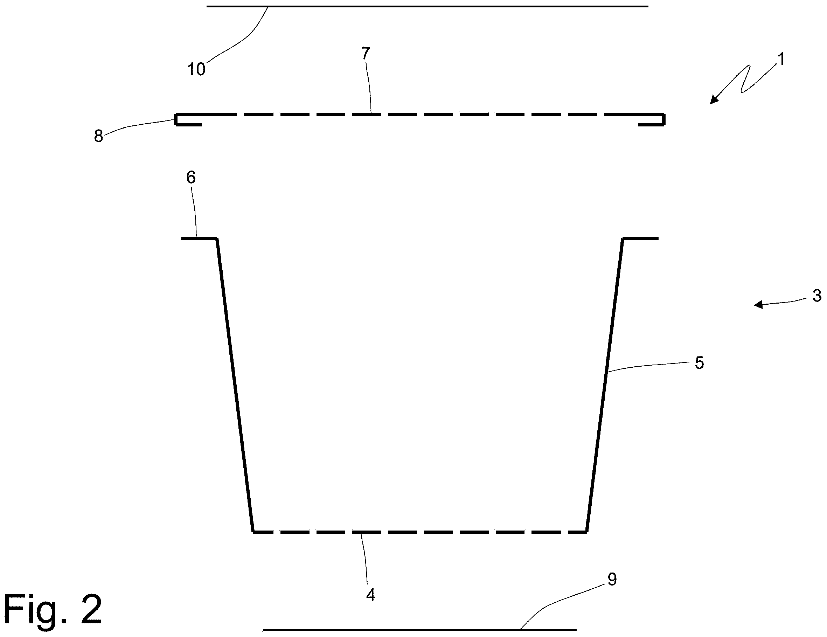

As illustrated in Figures 1 and 2, the pod 1 comprises a container 3 (made of a metallic material, typically aluminium) which has a truncated cone shape, is cup-shaped and defines on the inside a chamber designed to contain the smoking product 2. The container 3 has a perforated lower wall 4 (namely, provided with a series of ventilation through-holes) and a side wall 5 which starts from an edge of the lower wall 4 and ends with an annular collar 6 parallel to the lower wall 4. The pod 1 comprises a lid 7 (made of a metallic material, typically aluminium) which closes the container 3 at the top (namely, delimits the chamber at the top), is perforated (namely, has a series of ventilation through-holes), and rests on the annular collar 6 of the container 3. Preferably, an outer edge 8 of the lid 7 is folded in a "U"-shape around the annular collar 6 of the container 3 so as to embrace the annular collar 6 and therefore determine a nonseparable union with the annular collar 6.

The pod 1 comprises a lower label 9 which overlaps the lower wall 4 of the container 3, can be removed by tearing, and closes the ventilation holes of the lower wall 4 of the container 3 (in order to seal the chamber containing the smoking product 2) until the pod 1 is used. Similarly, the pod 1 comprises an upper label 10 which overlaps the lid 7, can be removed by tearing, and closes the ventilation holes of the lid 7 (in order to seal the chamber containing the smoking product 2) until the pod 1 is used.

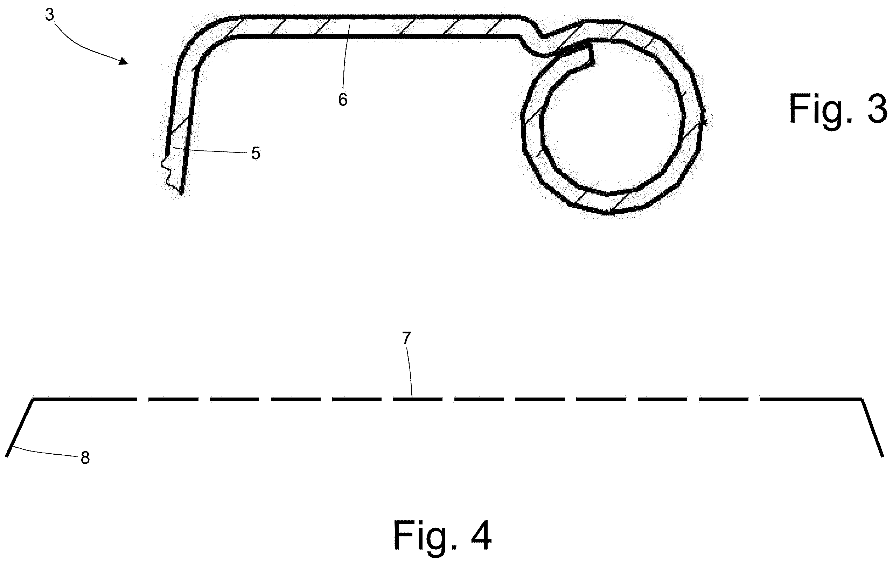

According to a preferred embodiment illustrated in Figure 3, the annular collar 6 of the container 3 ends with a circular fold on the same; namely, the outer end of the annular collar 6 of the container 3 is folded on the same to preferably form a closed ring. When the outer edge 8 of the lid 7 is folded in a "U"-shape around the annular collar 6 of the container 3, it causes a pressing of the outer end of the annular collar 6 (as illustrated in the enlarged scale detail in Figure 1). This folding on itself of the outer end of the annular collar 6 of the container 3 increases the seal that is created between the collar 6 and the lid 7 when the outer edge 8 of the lid 7 is folded in a "U"-shape around the annular collar 6.

According to a preferred embodiment illustrated in Figure 4, before being coupled to the container 3, the lid 7 has its outer edge 8 folded inwards so as to favour the subsequent folding in a "U" shape of the outer edge 8 of the lid 7 around the annular collar 6 of the container 3; generally, the outer edge 8 is folded inwards by approximately 70-80° in order to give the lid 7 a truncated cone shape which is self-centring relative to the container 3.

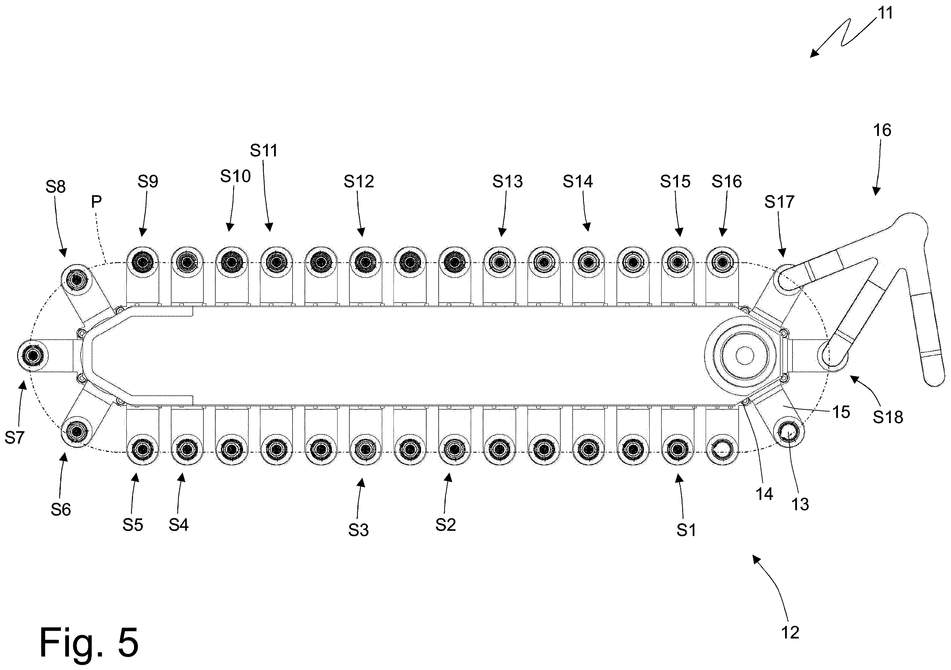

In Figure 5, number 11 denotes as a whole a manufacturing machine (only partially illustrated) for the production of the pods 1 described above. The manufacturing machine 11 has intermittent movement, namely, its conveyors cyclically alternate motion phases and stop phases.

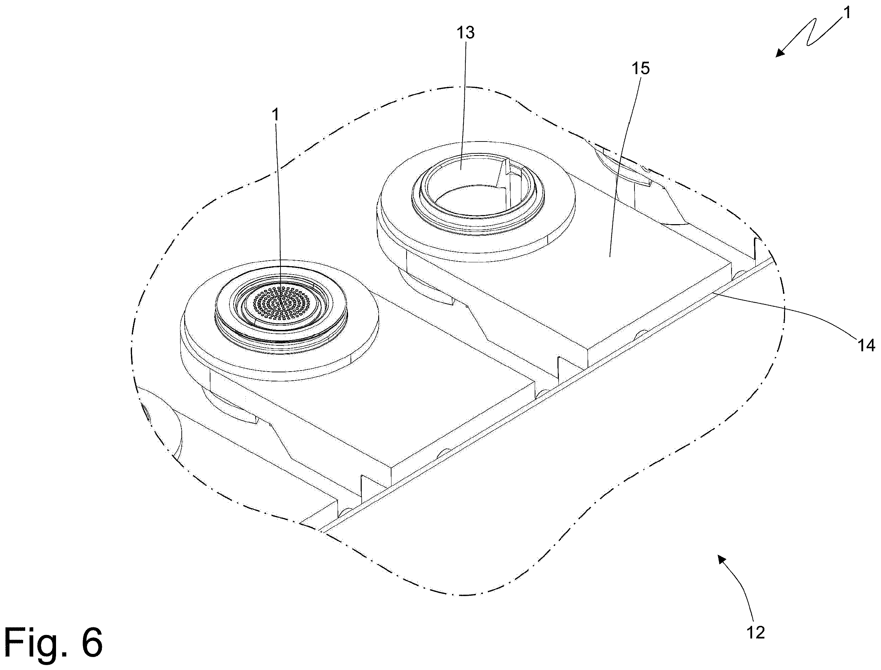

As illustrated in Figure 5, the manufacturing machine 11 comprises a main conveyor 12 (illustrated in detail in Figure 6), which supports a plurality of pockets 13 so as to cyclically move the pockets 13 along a horizontal and closed in a loop manufacturing path P. According to a preferred embodiment, the main conveyor 12 comprises a chain 14 which is closed in a loop around two end toothed wheels and supports in a cantilever manner the pockets 13 by means of corresponding support arms 15.

With reference to Figure 5, the manufacturing path P begins at a feeding station S1, where a corresponding empty container 3 is inserted into each pocket 13 while standing still. Each pocket 13 has an annular and truncated cone shape which reproduces the outer shape of the container 3; in this way each pocket 13 engages only a lower part of the side wall 5 of a container 3, leaving free both the lower wall 4 of the container 3 and an upper part of the side wall 5 of the container 3 in the area of the collar 6 (namely, the collar 6 is raised - spaced - from the pocket 13 and therefore does not touch the pocket 13).

Downstream of the feeding station S1 a labelling station S2 is provided, where the respective lower label 9 is applied to the lower wall 4 of each container 3 carried by a pocket 13 while standing still; in the labelling station S2, the lower label 9 is fixed to the lower wall 4 by means of an annular weld (which must be sufficiently resistant to guarantee the sealing, namely, tightness, but which must not be too resistant in order to allow, in use, the tear off removal of the lower label 9).

Downstream of the labelling station S2 a welding station S3 is provided, where the annular weld that connects the lower label 9 to the lower wall 4 is reinforced (riveted); in other words, in the labelling station S2 the time to perform the annular weld is reduced and therefore the annular weld made only in the labelling station S2 is unlikely to be sufficiently resistant to guarantee the sealing and therefore it is necessary to repeat (rebated) the annular weld in the welding station S3 which is arranged immediately downstream of the labelling station S2.

Downstream of the welding station S3 a control station S4 is provided, where the presence and conformity of the previously applied lower label 9 is verified (typically by means of a video camera).

Downstream of the control station S4 a filling station S5 (optional) is provided, where microspheres known as *"beads"* are fed inside the container 3 carried by each pocket 13 while standing still which, in use, favour the oxygenation of the product 2. The filling station S5 is optional as the microspheres are inserted only for some special series of pods 1 (namely, when the presence of the microspheres is not required, the filling station S5 can be absent or present but deactivated).

Downstream of the filling station S5 a weighing station S6 is provided, where the weight of the container 3 carried by each pocket 13 standing still is measured (namely, the "tare" is measured before filling with the product 2).

Downstream of the weighing station S6 a filling station S7 is provided, where a quantity of product 2 is fed into the container 3 carried by each pocket 13 while standing still.

Downstream of the filling station S7 a weighing station S8 is provided, where the weight of the container 3 (now also containing a quantity of product 2) carried by each pocket 13 standing still is measured (namely the gross weight is measured, which allows, by subtracting the "tare" previously measured, to determine the net weight, that is, the weight of the quantity of product 2 provided in the container 3). The weight of the quantity of product 2 provided in the container 3 is used both to establish the conformity of the container 3 (that is, a container 3 with too much product 2 or with too little product 2 must be discarded), and to feedback control the filling carried out in the filling station S7.

In each weighing station S6 or S8 a vertically mobile plate is provided, which is arranged below the manufacturing path P (namely, below a pocket 13 standing still in the weighing station S6 or S8) and is coupled to a load cell. In use, the plate makes an upward stroke to lift a container 3 housed in the pocket 13 standing still so as to separate (by a few millimetres) the container 3 from the pocket 13 and therefore, once the weighing operation has been carried out, makes a return downward stroke to place the container 3 again in the pocket 13 while standing still.

Downstream of the weighing station S8 a feeding station S9 is provided, where a lid 7 is placed on the container 3 carried by each pocket 13 while standing still.

Downstream of the feeding station S9 a crimping (ring sealing) station S10 is provided, where the outer edge 8 of the lid 7 is deformed around the collar 6 of the container 3 carried by each pocket 13 standing still; in other words, the outer edge 8 of the lid 7 is folded in a "U" shape so as to embrace the collar 6 of the container 3. In fact, a crimping operation involves joining two parts (in this case the container 3 and the lid 7) by modifying (deforming) the edge of one part (in this case the outer edge 8 of the lid) to adhere to the other part (in this case the collar 6 of the container 3).

Downstream of the crimping station S10 a pressing station S11 is provided, where the outer edge 8 of the lid 7 is pressed around the collar 6 of the container 3 carried by each pocket 13 standing still to consolidate (reinforce) the union between the lid 7 and container 3. By way of example, in the crimping station S10 the edge 8 of the lid 7 is folded in a "U"-shape around the collar 6 of the container 3 with a force of the order of 50 kg while in the pressing station S11 the edge 8 of the lid 7 is pressed against the collar 6 of the container 3 with a force of the order of 500 kg (namely, ten times more).

Downstream of the pressing station S11 a control station S12 is provided, where the union between the outer edge 8 of the lid 7 and the collar 6 of the container 3 carried by each pocket 13 standing still is controlled.

Downstream of the control station S12 a labelling station S13 is provided, where the respective upper label 10 is applied to the lid 7 of each container 3 carried by a pocket 13 (thus completing the formation of a pod 1); in the labelling station S13, the upper label 10 is fixed to the lid 7 by means of an annular weld (which must be sufficiently resistant to guarantee the sealing, namely, tightness, but which must not be too resistant , in use, in order to allow the tear off removal of the upper label 10).

Downstream of the labelling station S13 a welding station S14 is provided, where the annular weld that connects the upper label 10 to the lid 7 is reinforced (riveted); in other words, in the labelling station S13 the time to carry out the annular weld is reduced and therefore the annular weld made only in the labelling station S13 is unlikely to be sufficiently resistant to guarantee the sealing and therefore it is necessary to repeat (rebated) the annular weld in the welding station S14 which is arranged immediately downstream of the labelling station S13.

Downstream of the welding station S14 a control station S15 is provided, where the presence and conformity of the previously applied upper label 10 is verified (typically by means of a video camera).

Downstream of the control station S15 a discharge station S16 is provided, where any defective pod 1 is discharged, namely, extracted from the respective pocket 13 while standing still and directed towards a discharge path.

Downstream of the discharge station S16 a replenishment station S17 (optional) is provided, where compliant pods 1 (namely, devoid of defects) can be reinserted into the manufacturing path P after the same have been removed from the manufacturing path P for an error in evaluation or for a random check.

Downstream of the replenishment station S17 a transfer station S18 is provided, where the pod carried by each pocket 13 standing still is picked up by a transfer device 18 (of the *"pick* & *place"* type) to be transferred to a following conveyor of the manufacturing machine 11.

Downstream of the transfer station S18, an NFC device could be applied to each pod 1 in which information on the pod 1 is stored (for example the date and place of production, the format of the pod 1, the type of product 2 contained in pod 1...) . According to a possible embodiment, the NFC device is inserted into an annular body with an interruption of continuity (namely, shaped like an open ring) which is elastically deformed to be widened and therefore able to embrace the outer edge 8 of the lid 7 (that is, so as to be fitted around the outer edge 8 of the lid 7); the natural elastic return of the annular body tightens the annular body around the outer edge 8 of the lid 7, stably binding the annular body to the pod 1.

Downstream of the transfer station S18, each pod 1 could be inserted into a respective sealed blister (possibly in a nitrogen-based modified atmosphere) which keeps the pod 1 isolated from the external environment.

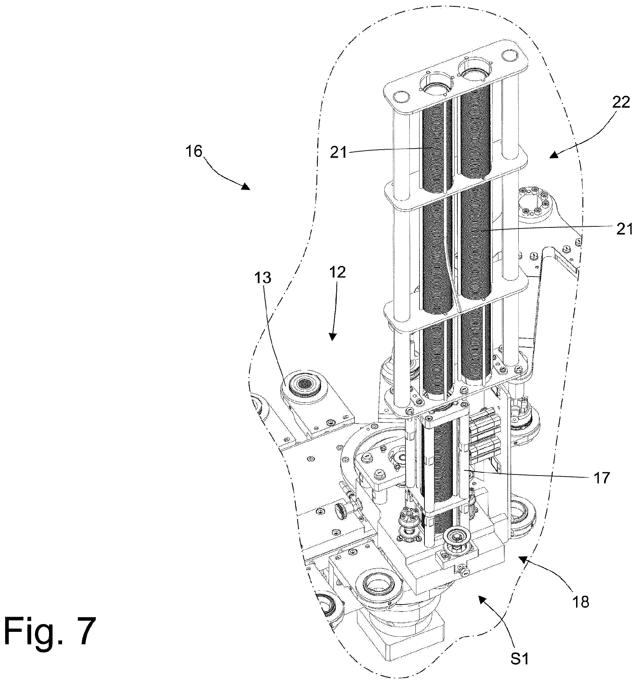

As illustrated in Figures 7, 8 and 9, the feeding station S1 is provided with a feeding assembly 16, which is configured to insert each empty container 3 into the respective pocket 13 while standing still in the feeding station S1. The feeding assembly 16 comprises a lower hopper 17 which is arranged above the main conveyor 12 and is configured to house a stack of empty containers 3 arranged inside one another; furthermore, the feeding assembly 16 comprises a transfer device 18 which is arranged on the bottom of the lower hopper 17 and is configured to extract one single empty container 3 at a time from the bottom of the stack and cause the empty container 3 to fall by gravity into the underlying pocket 13 while standing still in the feeding station S1.

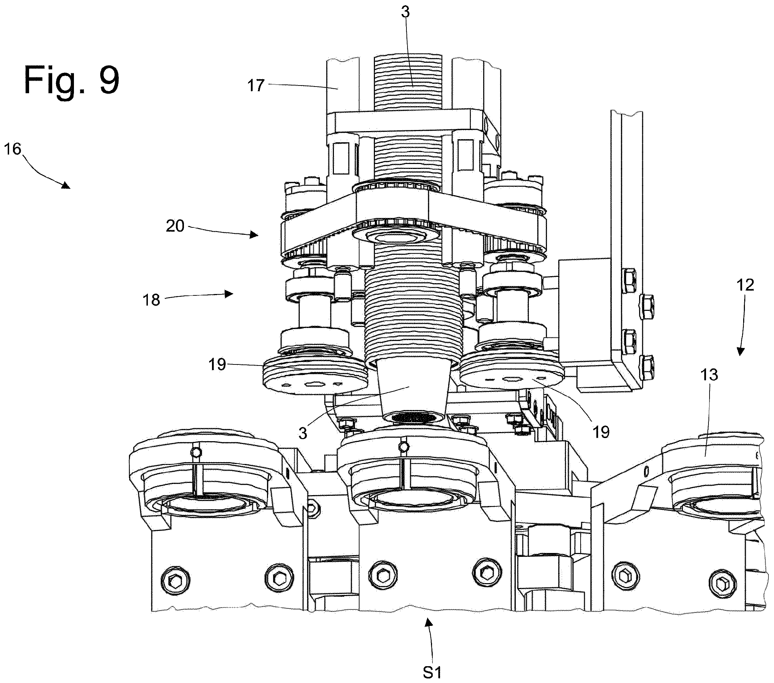

As better illustrated in figure 9, the transfer device 18 comprises a screw conveyor having two screws 19 which are mounted so as to rotate around two respective vertical rotation axes, are arranged on opposite sides of the lower hopper 17 and have respective threads configured to engage the collar 6 of each empty container 3. In other words, the last empty container 3 of the stack contained in the lower hopper 17 rests on both sides on the threads of the two screws 19 and therefore the controlled rotation of the screws 19 detaches the last empty container 3 of the stack from the rest of the stack, and cause the last empty container 3 of the stack to fall by gravity into the underlying pocket 13 while standing still in the feeding station S1. The transfer device 18 comprises an actuator device 20 which causes the two screws 19 to rotate together (namely, in a synchronized manner); the actuator device 20 comprises an electric motor that moves a toothed belt transmission.

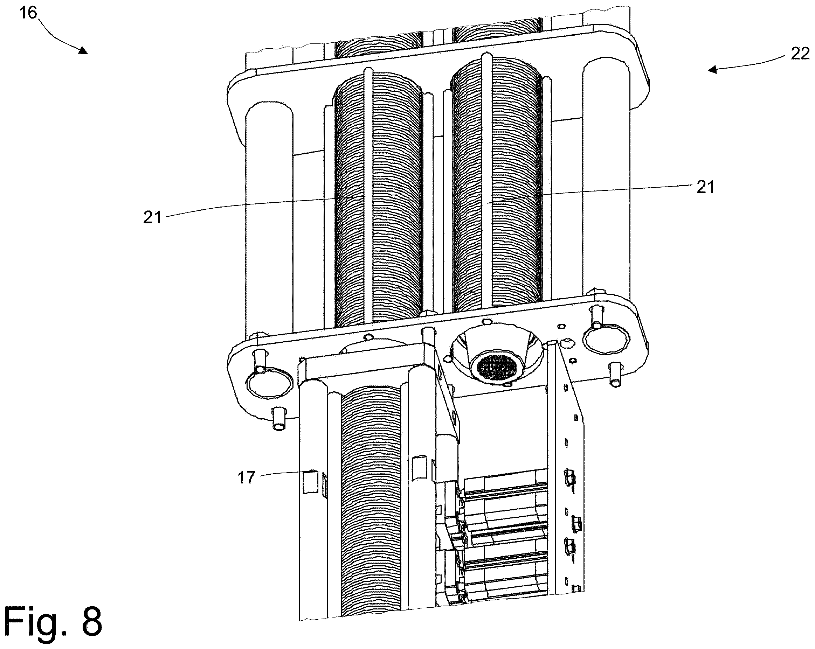

As better illustrated in Figure 8, the transfer device 18 comprises two upper hoppers 21, which are arranged side by side above the lower hopper 17 and are each configured to house a stack of empty containers 3 arranged inside one another; furthermore, the transfer device 18 comprises a slide 22 which supports the two upper hoppers 21 and is movable to vertically align, each time, only one of the two upper hoppers 21 to the lower hopper 17. In other words, the slide 22 is mounted so as to slide along a horizontal sliding direction (perpendicular to the upper hoppers 21 and to the lower hopper 17) under the thrust of an electric motor and in use is made to slide alternately to the right and to the left so as to vertically align, from time to time, only one of the two upper hoppers 21 with the lower hopper 17. In this way, while an upper hopper 21 is transferring the empty containers 3 of its stack to the underlying lower hopper 17, the other upper hopper 21 can be filled with a new stack of empty containers 3.

According to a preferred embodiment, each upper hopper 21 comprises a gate which is movable between an open position, in which it allows the stack of empty containers 3 to descend, by gravity, downwards (namely, towards the underlying lower hopper 17) and a closed position in which it does not allow the stack of empty containers 3 to descend, by gravity, downwards; obviously, the gate of the upper hopper 21 aligned with the lower hopper 17 is opened while the gate of the other upper hopper 21 (not aligned with the lower hopper 17) is kept closed.

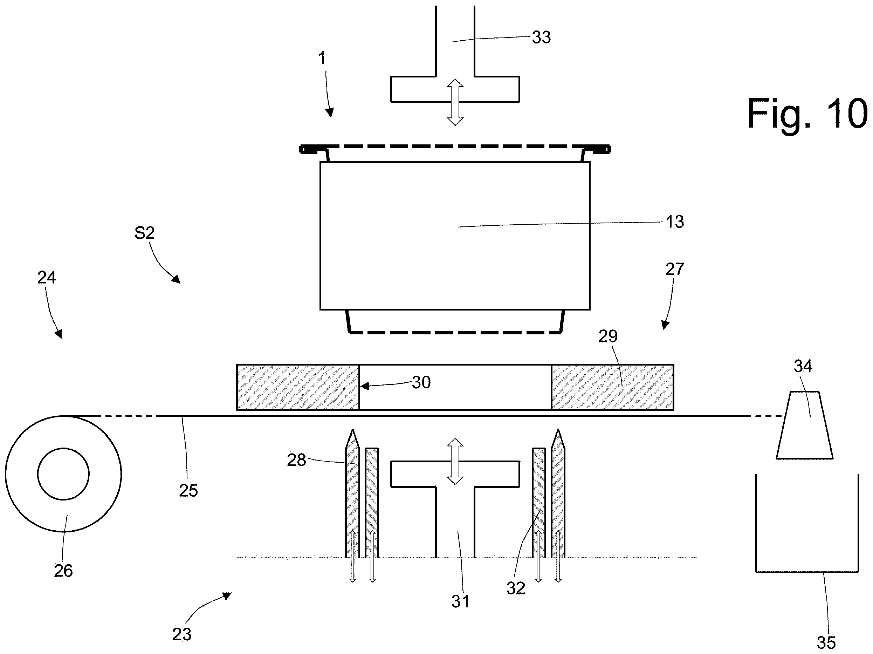

As illustrated in Figure 10, the labelling station S2 is provided with a labelling assembly 23 configured to apply a lower label 9 to the container 3 carried by each pocket 13 while standing still in the labelling station S2 (it should be noted that in Figure 10 a pod 1 with container 3 and lid 7 is illustrated; however, in the preferred embodiment in said labelling station S2 the lid 7 is not yet coupled to the container 3).

The labelling assembly 23 comprises a feeding assembly 24 which feeds a band 25 of (at least partially) a plastic material unwound from a reel 26 in alignment with the pocket 13 standing still in the labelling station S2 and a cutting device 27 which is movable perpendicularly to the manufacturing path P and is configured to cut the lower label 9 inside the band 25.

The cutting device 27 comprises a punch 28 (preferably serrated) having an annular shape which is movable perpendicularly to the manufacturing path P and an anvil 29 which is fixed, is arranged on the opposite side of the band 25 relative to the punch 28 and has, at the centre, a through-hole 30 (having a diameter slightly smaller than a diameter of the lower label 9).

The labelling assembly 23 comprises a holding head 31, which is movable perpendicularly to the manufacturing path P and is configured to engage the label cut from the band 25 and place the lower label 9 on the container 3; in particular, the holding head 31 is sized to pass through the through-hole 30 of the anvil 29.

The labelling assembly 23 comprises a ring-shaped welding device 32 which is movable perpendicularly to the manufacturing path P and is configured to seal the lower label 9 to the container 3 by means of an annular weld; in particular, the welding device 32 is sized to pass through the through-hole 30 of the anvil 29 and to contain the holding head 31 inside the same.

The labelling assembly 23 also comprises a countering head 33 which is arranged on the opposite side of the holding head 31 and is movable perpendicularly to the manufacturing path P so as to rest, in use, on the lower wall 4 of the container 3 on the opposite side of the holding head 31.

Finally, the labelling assembly 23 comprises a shredding device 34 which receives the band 25 downstream of the labelling station S2 (namely, it receives the band 25 having a succession of holes in the areas in which the lower labels 9 have been cut) and shreds the band 25 so as to generate small pieces which are then collected in an underlying collecting container 35.

The holding head 31, the annular-shaped welding device 32, and the annular-shaped punch 28 of the cutting device 27 are arranged concentric with one another and one inside the other (the holding head 31 is arranged further internally while the punch 28 is arranged more externally). In use, the punch 28 is initially moved axially (vertically) upwards, cutting the band 25 against the anvil 29 to separate a lower label 9; at the same time, the holding head 31 is moved axially (vertically) upwards and engages the newly cut lower label 9 by means of suction and then lifts the lower label 9 so as to rest the lower label 9 against the lower wall 4 of the container 3 carried by the pocket 13 standing still in the labelling station S2. Finally, the welding device 32 is moved axially (vertically) upwards, and by pressing the lower label 9 against the lower wall 4 of the container 3 (while on the opposite side the countering head 33 keeps the lower wall 4 of the container 3 vertically still) performs an (initial, preliminary) annular weld of the lower label 9 to the lower wall 4 of the container 3.

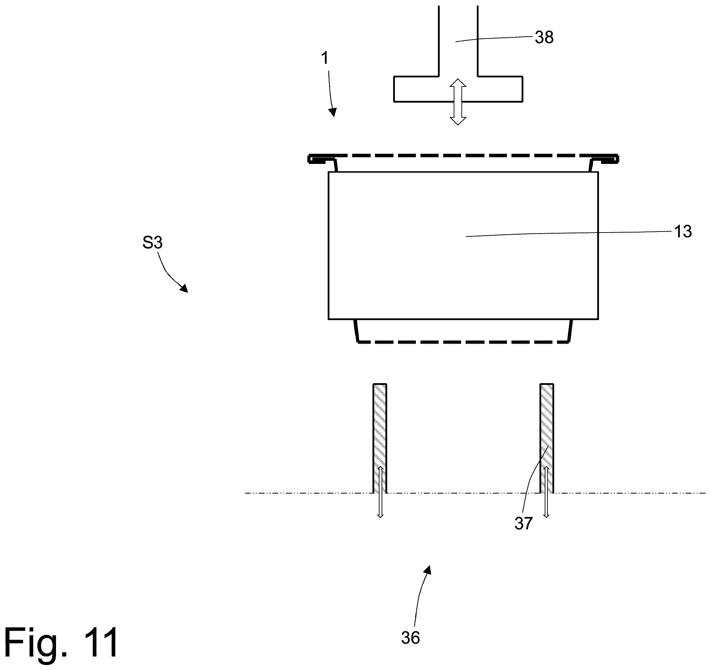

As previously mentioned, the (initial, preliminary) annular weld performed by the welding device 32 is sufficiently strong to make the lower label 9 adhere to the lower wall 4 of the container 3, but generally it is not sufficiently strong to guarantee the necessary sealing (tightness). Therefore, as illustrated in Figure 11, the welding station S3 comprises a welding assembly 36 configured to rivet the (initial, preliminary) annular weld of the lower label 9 to the container 3. The welding assembly 36 comprises an annular-shaped welding device 37 (similar to the welding device 31 of the labelling assembly 23) which is movable perpendicularly to the manufacturing path P and is configured to weld the lower label 9 to the container 3 by means of an annular weld. The welding assembly 36 also comprises a countering head 38 (similar to the countering head 33 of the labelling assembly 23) which is arranged on the opposite side of the welding device 37 relative to the lower wall 4 of the container 3 and is movable perpendicularly to the manufacturing path P so as to rest, in use, on the lower wall 4 of the container 3 on the opposite side of the welding device 37. It should be noted that Figure 11 illustrates a pod 1 with container 3 and lid 7; however, in the preferred embodiment in said welding station S3 the lid 7 is not yet coupled to the container 3.

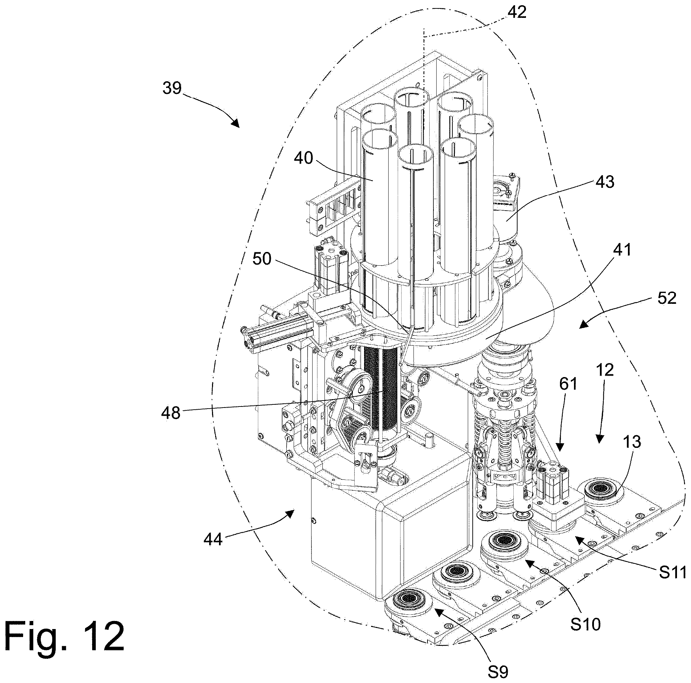

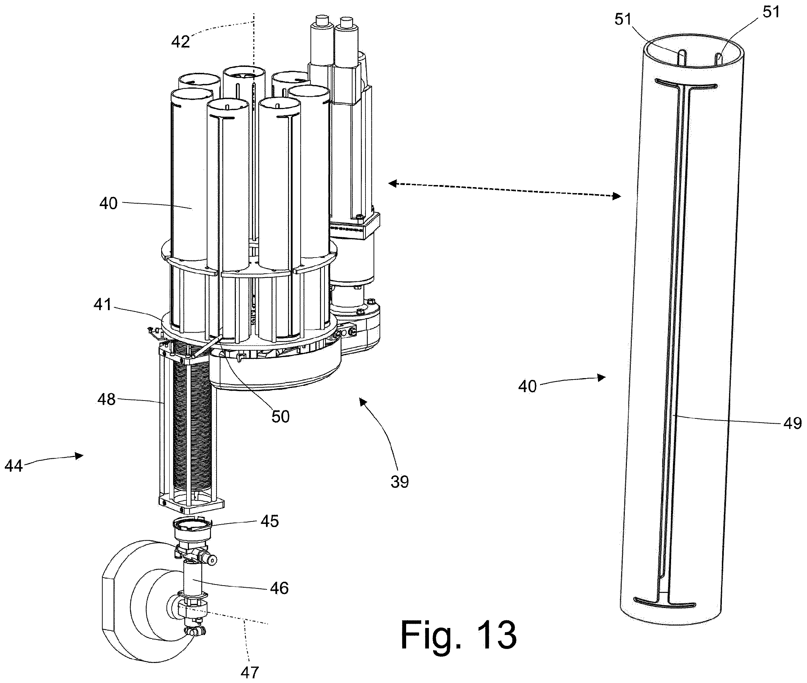

As illustrated in Figures 12 and 13, the feeding station S9 comprises a feeding assembly 39 which is configured to place the lid 7 on the annular collar 6 of the container 3 carried by the pocket 13 while standing still in the feeding station S9.

The feeding assembly 39 comprises a plurality of containing tubes 40 which are vertically oriented and are configured to house respective stacks of lids 7 and a support drum 41 which is mounted so as to rotate around a vertical rotation axis 42 and supports the containing tubes 40 arranged along a circumference centred on the rotation axis 42 (namely, the support drum 41 forms a sort of *"cartridge holder"* in which the *"cartridges"* are the containing tubes 40); the rotation of the support drum 41 around the vertical rotation axis 42 cyclically moves only one containing tube 40 at a time into a pick-up position from which the lids 7 housed in the containing tube 40 can be picked up one at a time. In particular, the feeding assembly 39 comprises an actuator device 43 (generally an electric motor) which rotates the support drum 41 around the rotation axis 42 to arrange all the containing tubes 40 in succession in the pick-up position.

Furthermore, the feeding assembly 39 comprises a transfer device 44 which is configured to pick up a lid 7 from the bottom of a containing tube 40, which is in the pick-up position, and then places the lid 7 on the annular collar 6 of the container 3 carried by the pocket 13 standing still in the feeding station S9. In particular, the transfer device 44 comprises a sucking holding head 45 designed to engage a lid 7 and a rotating arm 46 which supports, at one end, the sucking holding head 45 and, at the opposite end, is hinged so as to rotate around a horizontal rotation axis 47. According to a preferred embodiment, the transfer device 44 also comprises a hopper 48, which is vertically oriented and is arranged between the support drum 41 at the pick-up position and the rotating arm 46. The rotation of the rotating arm 46 around the rotation axis 47 cyclically moves the holding head 31 between the bottom of the hopper 48 and a release position above a container 3 carried by the pocket 13 standing still in the feeding station S9.

According to a preferred embodiment, the containing tubes 40 can be removed from the support drum 41 in order to be filled with the respective stacks of lids 7 when they are separated from the support drum 41 and then mounted full on the support drum 41. Preferably, each containing tube 40 comprises a main through-slot 49 (Figure 13) which is arranged at the side and extends axially along the entire containing tube 40 and at least one blade 50 (Figure 12) which can be inserted/extracted through the main through-slot 49 and slides along the main through-slot 49 in order to prevent the lids 7 from slippingout from the containing tube 40 or to guide a descent of the lids 7 along the containing tube 40. Each main through-slot 49 has an "I" shape made up of two end sections which have a larger circumferential extension in order to allow the blade 50 to be inserted/extracted and a central section which has a smaller circumferential extension in order to allow only the axial sliding of the blade 50 (namely, it allows only the handle of the blade 50 to pass through). According to a possible embodiment, each containing tube 40 comprises two secondary through-slots 51 (Figure 13) which are arranged laterally on an opposite side of the main through-slot 49 and extend axially along the entire containing tube 40; the main through-slot 49 allows the passage of a handle of the blade 50 while the secondary through-slots 51 allow the passage of two appendages of the blade 50 opposite the handle.

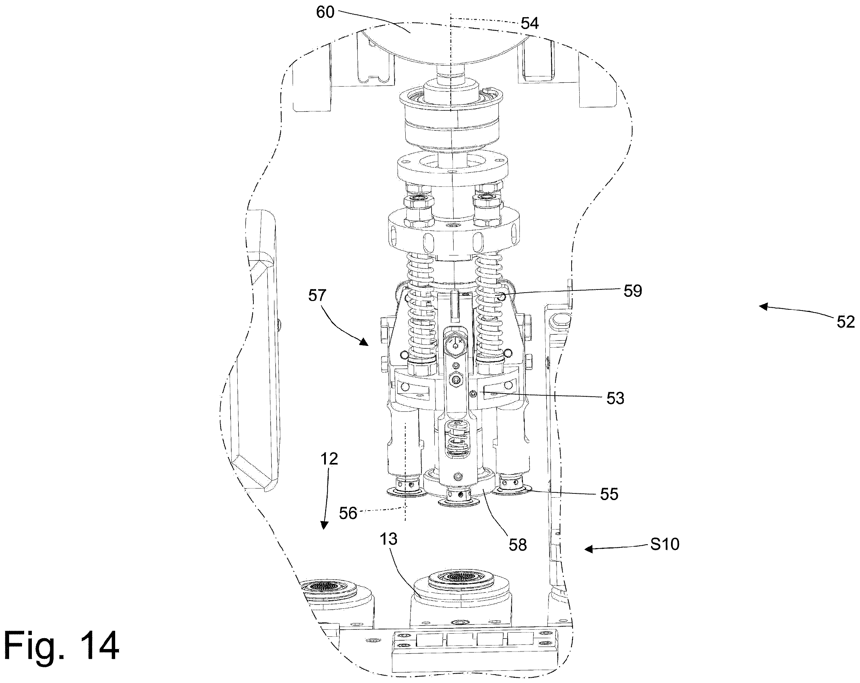

As illustrated in Figures 12 and 14, the crimping station S10 (arranged immediately downstream of the feeding station S9) is provided with a crimping assembly 52 configured to fold an outer edge 8 of the lid 7 around the annular collar 6 in a "U"- shape so as to embrace the annular collar 6.

As illustrated in Figure 14, the crimping assembly 52 comprises a support body 53 arranged in axial alignment with the pocket 13 standing still in the crimping station S10 and mounted in a rotary manner so as to rotate around a vertical rotation axis 54 and a plurality of folding discs 55 (deformers), which are designed to fold the outer edge 8 of the lid 7, are mounted on the support body 53 to form a circle at the centre of which the lid 7, in use, is arranged and are radially movable to radially come close and move away from the lid 7, which, in use, is at their centre. Each folding disc 55 is mounted on the support body 53 in a rotary manner so as to rotate around a vertical rotation axis 56 parallel to the rotation axis 54.

The crimping assembly 52 comprises an actuator device 57 which moves all the folding discs 55 between a loading/unloading position in which the folding discs 55 are at a distance different from zero from the lid 7 which, in use, is at their centre, and a work position, in which the folding discs 55 touch the lid 7 which, in use, is at their centre. Furthermore, the crimping assembly 52 comprises a central countering element 58 which does not rotate with the support body 53 and is elastically pushed with a calibrated pressure against a central portion of the lid 7 to keep the lid 7 still (namely, to prevent the lid 7 from rotating) during the folding of the edge 8 of the lid 7 carried out by the folding discs 55.

According to a preferred embodiment, the crimping assembly 52 comprises a safety spring 59 which pushes the support body 53 far from the main conveyor 12 and an actuator device 60 which is configured to move, in use, the support body 53 towards the main conveyor 12 by overcoming the elastic force generated by the safety spring 59. In this way, in the event of problems with the actuator device 60, the support body 53 (together with the folding discs 55) remains (relatively) far from the main conveyor 12 and does not interfere with the movement of the main conveyor 12.

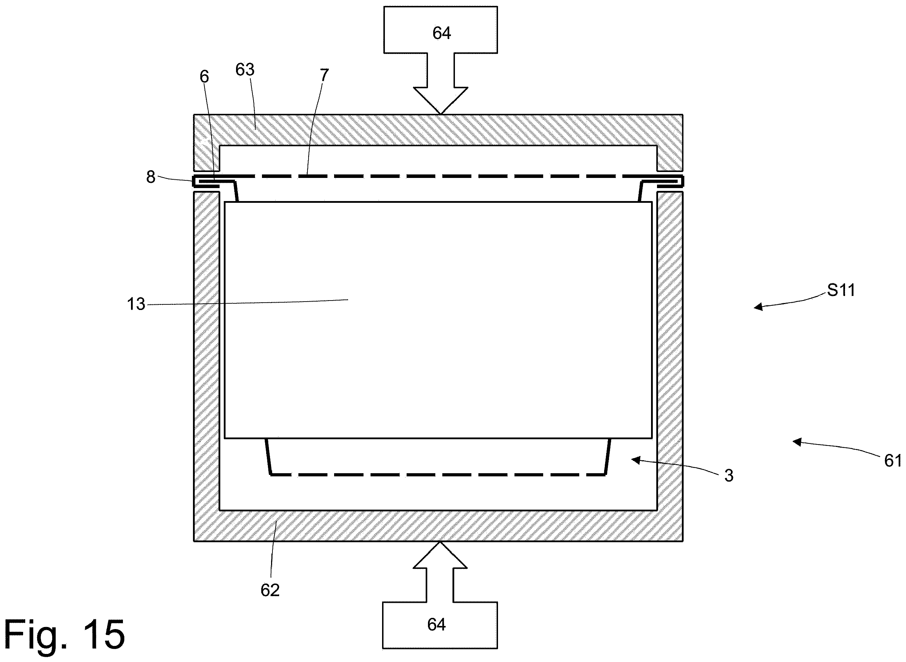

As illustrated in Figure 15, the pressing station S11 (which is arranged immediately downstream of the crimping station S10) is provided with a pressing assembly 61 configured to apply a compression, which presses the outer edge 8 of the lid 7 folded in a "U"-shape around the annular collar 6. The pressing assembly 61 comprises a lower ring 62 designed to contain on the inside the pocket 13 standing still in the pressing station S11 and containing, in turn, the container 3 and an upper ring 63 opposite the lower ring 62 and designed to clamp the outer edge 8 of the lid 7 folded in a "U"-shape around the annular collar 6 against the lower ring 62. Furthermore, the pressing assembly 61 comprises an actuator device 64 configured to move the two rings 62 and 63 between a rest position, in which the two rings 62 and 63 are far from the pocket 13 so as to allow the pocket 13 to be moved along the manufacturing path P, and a work position in which the two rings 62 and 63 are forcefully pushed towards one another with the interposition of the outer edge 8 of the lid 7 folded in a "U"-shape around the annular collar 6.

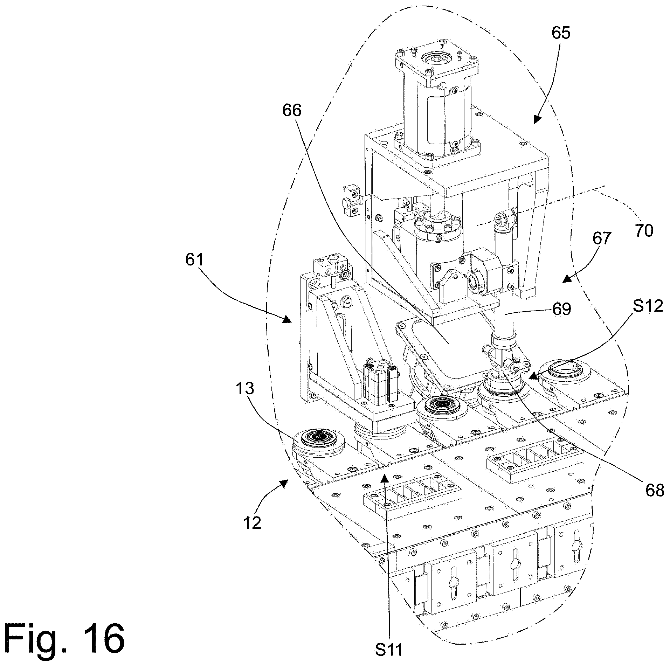

As illustrated in Figure 16, the control station S12 (which is arranged immediately downstream of the pressing station S11) is provided with a control assembly 65 configured to verify the correct coupling between the outer edge 8 of the lid 7 and the annular collar 6 of the container 3 (namely, to verify that the outer edge 8 of the lid 7 is folded without gaps around the annular collar 6 of the container 3). The control assembly 65 comprises a video camera 66 arranged in a fixed position beside the main conveyor 12 and a handling device 67 configured to extract the pod 1 from the pocket 13 while standing still in the control station S12 so as to direct the lower part of the pod 1 towards the video camera 66 and subsequently insert again the pod 1 into the pocket 13 while standing still in the control station S12. In particular, by *"looking"* at the pod 1 from below (namely, from the lower wall 4 of the container 3) it is possible to see if the outer edge 8 of the lid 7 is well folded around the annular collar 6 of the container 3. Preferably, the outer colour of the container 3 (therefore of the annular collar 6 of the container 3) is different from the outer colour of the lid 7 (therefore of the outer edge 8 of the lid 7); consequently, if the video camera 66 by *"looking"* at the pod 1 from below sees differences in colour then it can be deduced that the outer edge 8 of the lid 7 has not been folded well around the annular collar 6 of the container 3, consequently leaving in sight parts of the annular collar 6 of the container 3.

According to a preferred embodiment, the handling device 67 is configured to engage the lid 7 of the pod 1 by means of suction and then lift the pod 1 by pulling the same from the lid 7; in particular, the handling device 67 comprises a sucking holding head 68 and a rotating arm 69 which is hinged so as to rotate around a horizontal rotation axis 70 in order to move the holding head 68 between a transfer position at the pocket 13 standing still in the control station S12 and a control position in front of the video camera 66.

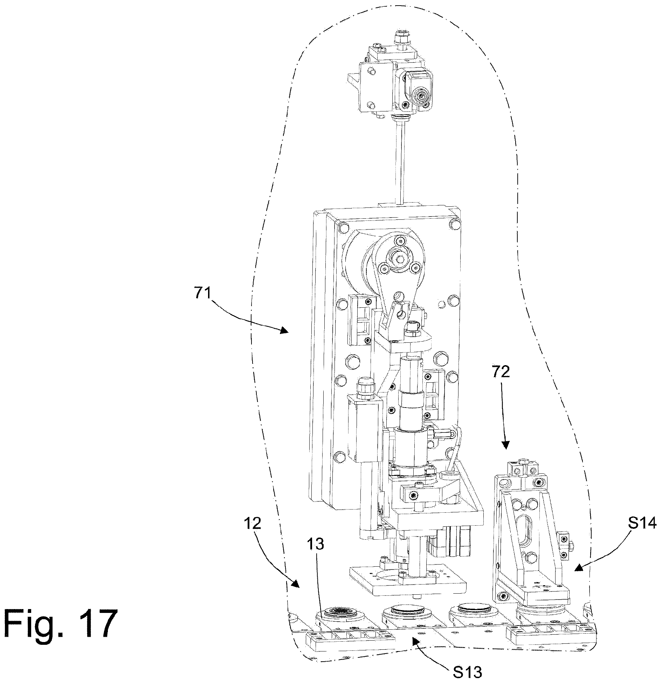

As illustrated in Figure 17, the labelling station S13 comprises a labelling assembly 71 configured to apply an upper label 10 to the lid 7. The labelling assembly 71 is entirely similar to the labelling assembly 23 (the only relevant difference is the positioning as the labelling assembly 71 is arranged above the main conveyor 12 while the labelling assembly 23 is arranged below the main conveyor 12) and therefore for the characteristics of the labelling assembly 71 reference is made to what has been previously stated for the labelling assembly 23.

As illustrated in Figure 17, the welding station S14 comprises a welding assembly 72 configured to rivet the (initial, preliminary) annular weld of the upper label 10 to the container 3. The welding assembly 72 is entirely similar to the welding assembly 36 (the only significant difference is the positioning as the welding assembly 72 is arranged above the main conveyor 12 while the welding assembly 36 is arranged below the main conveyor 12) and therefore for the characteristics of the welding assembly 72 reference is made to what has been previously stated for the welding assembly 36.

In summary, the manufacturing machine 11 comprises the labelling station S2, which is arranged immediately downstream of the feeding station S1 and is provided with the labelling assembly 23 configured to apply the lower label 9 to the lower wall 4 of the container 3 carried by a pocket 13 while standing still in the labelling station S2 and a labelling station S13, which is arranged downstream of the feeding station S9 (and immediately downstream of the control station S12) and is provided with the labelling assembly 71 configured to apply the upper label 10 to the lid 7 of the pod 1 carried by a pocket 13 while standing still in the labelling station S13.

The embodiments described herein can be combined with one another without departing from the scope of the present invention.

The manufacturing machine 11 described above has numerous advantages.

First of all, the manufacturing machine 11 described above allows to guarantee an optimal sealing between the container 3 and the lid 7 without the use of plastic materials which are problematic during the use of the pod 1: in use the pod 1 is heated to 300-400 °C to allow product 2 to release fumes (aerosols) which will subsequently be aspirated by the user and therefore any plastic materials present in the pod 1 could in turn release completely unwanted volatile substances. In this regard, it is important to note that the container 3 and the lid 7 are completely made of a metallic material (typically aluminium) while the labels 9 and 10 contain a plastic material, but are completely eliminated before use. The optimal sealing between the container 3 and the lid 7 is obtained while maintaining a completely metallic coupling between the container 3 and the lid 7 thanks to the fact that the outer edge 8 of the lid 7 is folded in a "U"-shape so as to embrace the collar 6 of the container 3 and subsequently the outer edge 8 folded in a "U"-shape around the collar 6 is pressed with a very high pressure (of the order of several hundred kilograms) which deforms the outer edge 8 and the collar 6 together, thus eliminating even the smallest interstices.

Furthermore, the manufacturing machine 11 described above allows high hourly productivity to be achieved (the nominal hourly productivity of the manufacturing machine 11 is of the order of 300-400 pods 1 per minute) while guaranteeing a highquality standard. This result is achieved, among other things, thanks to a particularly gentle, but at the same time very effective and efficient, treatment of the containers 3 and the lids 7, which are never excessively mechanically stressed and at the same time always provide a known and certain position.

Furthermore, the manufacturing machine 11 described above is particularly compact and allows an operator who is near the manufacturing machine 11 to reach by hand, all the various parts of the manufacturing machine 11 without having to make unnatural movements.

Finally, the manufacturing machine 11 described above is relatively simple and inexpensive to implement.

### LIST OF REFERENCE NUMBERS OF THE FIGURES

1 pod
2 product
3 container
4 lower wall
5 side wall
6 collar
7 lid
8 outer edge
9 lower label
10 upper label
11 manufacturing machine
12 main conveyor
13 pockets
14 chain
15 support arms
16 feeding assembly
17 lower hopper
18 transfer device
19 screws
20 actuator device
21 upper hoppers
22 slide
23 labelling assembly
24 feeding assembly
25 band
26 reel
27 cutting device
28 punch
29 anvil
30 through-hole
31 holding head
32 welding device
33 countering head
34 shredding device
35 collecting container
36 welding assembly
37 welding device
38 countering head
39 feeding assembly
40 containing tubes
41 support drum
42 rotation axis
43 actuator device
44 transfer device
45 holding head
46 rotating arm
47 rotation axis
48 hopper
49 main through-slot
50 blade
51 secondary through-slot
52 crimping assembly
53 support body
54 rotation axis
55 folding discs
56 rotation axis
57 actuator device
58 countering element
59 safety spring
60 actuator device
61 pressing assembly
62 lower ring
63 upper ring
64 actuator device
65 control assembly
66 video camera
67 handling device
68 holding head
69 rotating arm
70 rotation axis
71 labelling assembly
72 welding assembly
P manufacturing path
S1 feeding station
S2 labelling station
S3 welding station
S4 control station
S5 filling station
S6 weighing station
S7 filling station
S8 weighing station
S9 feeding station
S10 crimping station
S11 pressing station
S12 control station
S13 labelling station
S14 welding station
S15 control station
S16 discharge station
S17 replenishment station
S18 transfer station

## Claims

1. A manufacturing machine (11) for the production of a pod (1) containing a smoking product (2) designed to generate an aerosol after being heated; the pod (1) comprises: a container (3), which is cup-shaped, has a lower wall (4) and has a side wall (5) ending with an annular collar (6); and a lid (7), which closes the container (3) at the top and rests on the annular collar (6) of the container (3); the manufacturing machine (11) comprises:
a main conveyor (12), which moves at least one pocket (13) designed to contain a container (3) along a manufacturing path (P) ;
a first feeding station (S1) provided with a first feeding assembly (16), which is configured to insert the empty container (3) into the pocket (13) while standing still;
a filling station (S7), where a quantity of product (2) is inserted into the container (3) carried by the pocket (13) while standing still; and
a second feeding station (S9) provided with a second feeding assembly (39), which is configured to place the lid (7) on the annular collar (6) of the container (3) carried by the pocket (13) while standing still;
the manufacturing machine (11) is **characterized in that** it comprises a crimping station (S10), which is arranged downstream of the second feeding station (S9) and is provided with a crimping assembly (52) configured to fold in a "U"-shape an outer edge (8) of the lid (7) around the annular collar (6) so as to embrace the annular collar (6).

2. The manufacturing machine (11) according to claim 1, wherein the crimping assembly (52) comprises:
a support body (53), which is axially aligned with the pocket (13) standing still and is mounted in a rotary manner to rotate around a first rotation axis (54); and
a plurality of folding discs (55), which are designed to fold the outer edge (8) of the lid (7), are mounted on the support body (53) to form a circle at whose centre the lid (7) is arranged in use and are radially movable so as to radially get close to and away from the lid (7), which, in use, is at their centre.

3. The manufacturing machine (11) according to claim 2, wherein each folding disc (55) is mounted on the support body (53) in a rotary manner so as to rotate around a second rotation axis (56), which is parallel to the first rotation axis (54).

4. The manufacturing machine (11) according to claim 2 or 3, wherein the crimping assembly (52) comprises a first actuator device (57), which moves all folding discs (55) between a loading/unloading position, in which the folding discs (55) are at a distance other than zero from the lid (7), which, in use, is at their centre, and a work position, in which the folding discs (55) touch the lid (7), which, in use, is at their centre.

5. The manufacturing machine (11) according to claim 2, 3 or 4, wherein the crimping assembly (52) comprises a central countering element (58), which does not rotate with the support body (53) and is pushed against a central portion of the lid (7) .

6. The manufacturing machine (11) according to one of the claims from 2 to 5, wherein the crimping assembly (52) comprises:
a safety spring (59), which pushes the support body (53) far from the main conveyor (12); and
a second actuator device (60), which is configured to move, in use, the support body (53) towards the main conveyor (12) thus overcoming the elastic force generated by the safety spring (59) .

7. The manufacturing machine (11) according to one of the claims from 1 to 6 and comprising a pressing station (S11), which is arranged downstream of the crimping station (S10) and is provided with a pressing assembly (61) configured to apply a compression, which presses the outer edge (8) of the lid (7) folded in a "U"-shape around the annular collar (6).

8. The manufacturing machine (11) according to claim 7, wherein the pressing assembly (61) comprises:
a lower ring (62) designed to contain, on the inside, the pocket (13) standing still and containing, in turn, the container (3);
an upper ring (63) opposite the lower ring (62) and designed to clamp the outer edge (8) of the lid (7) folded in a "U"-shape around the annular collar (6) against the lower ring (62); and
an actuator (64) configured to move the two rings (62, 63) between a rest position, in which the two rings (62, 63) are far from the pocket (13) while standing still so as to allow the pocket (13) to move along the manufacturing path (P), and a work position, in which the two rings (62, 63) are pushed towards one another with the interposition of the outer edge (8) of the lid (7) folded in a "U"-shape around the annular collar (6).

9. The manufacturing machine (11) according to one of the claims from 1 to 8 and comprising a control station (S12), which is arranged downstream of the crimping station (S10) and is provided with a control assembly (65) configured to verify the correct coupling between the outer edge (8) of the lid (7) and the annular collar (6) of the container (3).

10. The manufacturing machine (11) according to claim 9, wherein the control assembly (65) comprises:
a camera (66) arranged, preferably in a fixed position, beside the main conveyor (12); and
a handling device (67) configured to extract the pod (1) from the pocket (13) standing still so as to turn the lower part of the pod (1) towards the camera (66) and subsequently insert again the pod (1) into the pocket (13).

11. The manufacturing machine (11) according to claim 10, wherein the handling device (67) is configured to engage the lid (7) of the pod (1) by means of suction.

12. The manufacturing machine (11) according to one of the claims from 1 to 11 and comprising at least one labelling station (S2, S13) provided with a labelling assembly (23) configured to apply a label (9, 10) to the container (3) or to the lid (7).

13. The manufacturing machine (11) according to claim 12 and comprising:
a first labelling station (S2), which is arranged downstream of the first feeding station (S1) and is provided with a first labelling assembly (23) configured to apply a lower label (9) to a lower wall (4) of the container (3); and
a second labelling station (S13), which is arranged downstream of the second feeding station (S9) and is provided with a second labelling assembly (71) configured to apply an upper label (10) to the lid (7).

14. The manufacturing machine (11) according to claim 12 or 13, wherein each labelling assembly (23, 71) comprises:
a feeding assembly (24), which feeds a band (25) in alignment with the pocket (13) standing still;
a cutting device (27) movable perpendicularly to the manufacturing path (P) and configured to cut the label (9, 10) inside the band (25);
a holding head (31) movable perpendicularly to the manufacturing path (P) and configured to engage the label (9, 10) cut from the band (25) and place the label (9, 10) on the container (3) or on the lid (7); and
a welding device (32) movable perpendicularly to the manufacturing path (P) and configured to weld the label (9, 10) to the container (3) or to the lid (7) by means of an annular weld.

15. The manufacturing machine (11) according to claim 14 and comprising a welding station (S3, S14), which is arranged downstream of the labelling station (S2, S13) and is provided with a welding assembly (36, 72) configured to rivet the annular weld of the label (9, 10) to the container (3) or to the lid (7) .

16. The manufacturing machine (11) according to one of the claims from 1 to 15, wherein the first feeding assembly (16) comprises:
a lower hopper (17), which is arranged above the main conveyor (12) and is configured to house a stack of empty containers (3) arranged inside one another; and
a transfer device (18), which is arranged at the bottom of the lower hopper (17) and is configured to extract one single empty container (3) at a time from the bottom of the stack and to cause the empty container (3) to fall, by gravity, into the underlying pocket (13) while standing still.

17. The manufacturing machine (11) according to one of the claims from 1 to 16, wherein the second feeding device (39) comprises:
a plurality of containing tubes (40), which are vertically oriented and are configured to house respective stacks of lids (7); and
a support drum (41), which is mounted so as to rotate around a third vertical rotation axis (42) and supports the containing tubes (40) arranged along a circumference centred on the third rotation axis (42);
a transfer device (44) configured to pick up a lid (7) from the bottom of a containing tube (40), which is in a pick-up position, and then places the lid (7) on the annular collar (6) of the container (3) carried by the pocket (13) standing still; and
an actuator (43), which rotates the support drum (41) around the third rotation axis (42) so as to place, one after the other, all containing tubes (40) in the pick-up position.

18. The manufacturing machine (11) according to claim 17, wherein the transfer device (44) comprises:
a sucking holding head (45); and
a rotating arm (46), which supports, at one end, the sucking holding head (45) and, at the opposite end, is hinged so as to rotate around a fourth horizontal rotation axis (47).

19. The manufacturing machine (11) according to claim 17 or 18, wherein the containing tubes (40) can be removed from the support drum (41) in order to be filled with the respective stacks of lids (7), when they are separate from the support drum (41), and then be mounted again, full, on the support drum (41).

20. A manufacturing method for the production of a pod (1) containing a smoking product (2) designed to generate an aerosol following a heating; the pod (1) comprises: a container (3), which is cup-shaped, has a lower wall (4) and has a side wall (5) ending with an annular collar (6); and a lid (7), which closes the container (3) at the top, rests on the annular collar (6) of the container (3) and has an outer edge (8) fold in a "U"-shape around the annular collar (6) so as to embrace the annular collar (6); the manufacturing method comprises the steps of:
moving at least one pocket (13) designed to contain a container (3) along a manufacturing path (P);
inserting the empty container (3) into the pocket (13) standing still in a first feeding station (S1);
inserting a quantity of product (2) into the container (3) carried by the pocket (13) standing still in a filling station (S7); and
placing the lid (7) on the annular collar (6) of the container (3) carried by the pocket (13) standing still in a second feeding station (S9);
the manufacturing method is **characterized in that** it comprises the further step of folding an outer edge (8) of the lid (7) in a "U"-shape around the annular collar (6) so as to embrace the annular collar (6) in a crimping station (S10) arranged downstream of the second feeding station (S9).
